# EUROPÄISCHE PATENTSCHRIFT

(11) **EP 4 022 203 B1**
(45) Veröffentlichungstag und Bekanntmachung des Hinweises auf die Patenterteilung: **04.10.2023**
(21) Anmeldenummer: 20767731.1
(22) Anmeldetag: 21.08.2020
(51) Int. Cl.: F16K 3/24, F16K 47/08, F16B 39/00, F16B 39/10, F16K 1/42

(54) **KÄFIGVENTIL**
CAGE VALVE
VANNE À CAGE

(30) Priorität: 29.08.2019 DE 202019104758 U
(43) Veröffentlichungstag der Anmeldung: 06.07.2022
(73) Patentinhaber: Samson Aktiengesellschaft, 60314 Frankfurt (DE)
(72) Erfinder: HIELSCHER, Manuel, 60388 Frankfurt (DE)
(74) Vertreter: Puschmann Borchert Kaiser Klettner Patentanwälte Partnerschaft mbB
(86) Internationale Anmeldenummer: PCT/EP2020/073574
(87) Internationale Veröffentlichungsnummer: WO 2021/037769

(56) Entgegenhaltungen:
- EP-A1- 2 598 778
- DE-U1-202015 104 151
- US-A- 6 095 186
- US-A1- 2005 020 367

## Beschreibung

Die Erfindung betrifft ein Käfigventil nach dem Oberbegriff des Anspruchs 1.

Die WO 2012/012951 A1 offenbart ein Käfigventil, das ein Ventilgehäuse, einen Ventilkäfig, einen Ventilsitz und ein Ventilglied umfasst, wobei das Ventilglied mit dem Ventilsitz und mit dem Ventilkäfig zusammenwirkt, um den Strömungsquerschnitt zwischen einem Ventileinlass und einem Ventilauslass einzustellen. Der Ventilsitz weist Befestigungsbohrungen auf, die insbesondere auf einem zum Ventilsitz konzentrisch liegenden Kreis verteilt sind. Durch die Befestigungsbohrungen ist der Ventilsitz mit dem Ventilgehäuse mittels Schraubmitteln verschraubt. Der Ventilkäfig ist derart gestaltet, dass dieser den Verschraubungsbereich überlappt, so dass möglicherweise gelöste Schrauben nicht verloren werden können, wodurch eine verlustsichere Anordnung gegeben ist.

Auch die DE 20 2015 104 151 U1 offenbart ein Käfigventil, bei welchem der Ventilsitz mit dem Ventilgehäuse verschraubt ist.

Es ist Aufgabe der Erfindung, ein Käfigventil anzugeben, bei dem die Zuverlässigkeit der Schraubverbindung insbesondere unter Vibration und Temperaturschwankungen erhöht ist, da besonders die Ventilsitzbefestigung unter diesen Bedingungen leidet.

Die Aufgabe wird durch die kennzeichnenden Merkmale des Anspruchs 1 gelöst.

Die Unteransprüche bilden vorteilhafte Weiterbildungen der Erfindung.

In bekannter Weise umfasst ein Käfigventil ein Ventilgehäuse, einen Ventilkäfig, einen Ventilsitz und ein Ventilglied, das mit dem Ventilsitz und mit dem Ventilkäfig zusammenwirkt, um den Strömungsquerschnitt zwischen einem Ventileinlass und einem Ventilauslass einzustellen. Der Ventilsitz weist, insbesondere umfänglich verteilte, Befestigungsbohrungen auf, durch die der Ventilsitz mit dem Ventilgehäuse mittels Schraubmitteln verschraubt ist. Ein Ventilkäfig im Sinne der Erfindung ist eine zwischen dem Ventildeckel und dem Ventilsitz eingebrachte Drosselstruktur, insbesondere mit einer zylindrischen Grundform.

Erfindungsgemäß weisen die Schraubmittel eine unrunde oder eckige Außenkontur auf, wobei ein Sicherungselement vorgesehen ist, das derart gestaltet ist, dass es ein Ringelement bildet, das an der Kopfkontur aller Schraubmittel, die den Ventilsitz mit dem Ventilgehäuse verbinden, wenigstens teilweise anliegt und so ein Verdrehen der Schraubmittel verhindert.

Durch das Sicherungselement wird ein Verdrehen der Schraubmittel und damit ein Lösen der Schraubverbindung auch unter Vibration und bei Temperaturschwankungen effektiv verhindert. Das Sicherungselement ist, da es die Schraubmittel formschlüssig sichert, mehrfach verwendbar.

Bevorzugt sind die Schraubmittel Schrauben, die durch die Befestigungsbohrungen mit dem Ventilgehäuse in dort vorgesehene Muttergewinde eingeschraubt werden. Alternativ können die Schraubmittel auch Muttern sein, die auf an dem Ventilgehäuse angebrachte Gewindebolzen, die die Befestigungsbohrungen durchsetzen, aufgeschraubt werden. Diese Schraubmittel stellen die gängigsten Schraubmittel dar.

Insbesondere ist die Außenkontur der Schraubmittel eine Sechskantkontur. Diese Form ist insbesondere für Schraubmittel mit Außenantrieben verbreitet. Sie verbindet eine Antriebskontur mit einer Arretierungskontur, da die Seitenflächen sich ausgezeichnet zur drehsicheren Festlegung der Schraubmittel eigenen. Es können aber auch Konturen verwendet werden, die mehr als sechs Kanten aufweisen.

Gemäß einer besonders vorteilhaften Ausgestaltung ist das Sicherungselement scheibenförmig ausgebildet. Insbesondere ist dieses zwischen dem Ventilsitz und dem Ventilkäfig in Axialrichtung eingeklemmt gehalten.

Das Sicherungselement liegt bevorzugt radial innerhalb der Schraubmittel und die Außenkontur des Sicherungselements ist an die Außenkontur der Befestigungsmittel angepasst. Im Fall von Schraubmittelen mit einer Sechskantkontur weist das Sicherungselement an seiner umfänglichen, den Schraubmitteln zugewandten Wandung Abflachungen auf, die tangential an der Sicherungsscheibe liegen. Die Schrauben wurden ebenfalls in eine Position gedreht, in welche eine Seite parallel zur entsprechend liegenden Wandung liegt.

Zur Montage eines solchen Sicherungselements müssen bevorzugt alle Schraubmittel in die entsprechende Position gedreht werden, damit alle Abflachungen des Sicherungselements parallel zu einer Abflachung liegen. Dazu werden die Schraubmittel mit einem vorgesehenen Drehmoment angezogen und dann noch soweit gedreht, bis die entsprechende Lage erreicht ist. Bei drehmomentkritischen Anwendungen kann die Erhöhung der Kantenzahl auf mehr als sechs Kanten der Außenkontur vorteilhaft sein.

Gemäß einer weiteren vorteilhaften Ausgestaltung der Erfindung kann das Sicherungselement in seinem Längsschnitt Z-förmig ausgebildet sein, so dass der untere Schenkel zur Befestigung des Sicherungselements dient und eine untere Wandung seitlich an einem Schraubmittel anliegt und ein oberer Schenkel die Schraubmittel überragt. Bevorzugt liegt in einer Z-förmigen Ausgestaltung der den oberen und den unteren Schenkel verbindende Verbindungsschenkel orthogonal zum unteren und oberen Schenkel. So kann eine große Anlagefläche an der Wandung des Verbindungsschenkels bereitgestellt werden und zudem eine zusätzliche Verlustsicherung, beispielsweise für einen abgerissenen Schraubenkopf, bereitgestellt werden.

Gemäß einer besonders vorteilhaften Ausgestaltung des Sicherungselements ist dieses derart gestaltet, dass das Schraubmittel, insbesondere der Kopf einer Schraube, in Axialrichtung mit einer Vorspannkraft beaufschlagt wird. Dadurch kann einem Abreißen des Schraubenkopfes entgegengewirkt werden.

Der Übergang zwischen dem oberen Schenkel und dem Verbindungsschenkel kann gefast sein. Dadurch wird eine scharfe Anströmkante vermieden. Die Fase kann bevorzugt so gestaltet sein, dass eine Wirbelbildung des Prozessfluids im Bereich der Schraubverbindung reduziert wird, indem das Prozessfluid an der Schraubverbindung vorbeigeleitet wird.

Die Befestigungsbohrungen können bevorzugt auf einem Lochkreis in einem Flansch des Ventilsitzes eingebracht sein, wobei der Ventilsitz Markierungen aufweist. Die Markierungen liegen auf einem Teil einer Tangente an einem konzentrischen zum Lochkreis liegenden Kreis mit einem Durchmesser, der dem Lochkreisdurchmesser abzüglich der Breite des vorgesehenen Schraubmittels mit Vieleckkontur entspricht. Die Breite des Schraubmittels bestimmt sich nach dem Abstand gegenüberliegender Kanten bzw. Flächen.

Der Ventilsitz kann im Bereich der Sitzkante gegenüber dem Befestigungsflansch erhöht ausgebildet sein, insbesondere sich zylindrisch abheben. Der Innendurchmesser des Sicherungselements ist dabei bevorzugt auf den Außendurchmesser der zylindrischen Erhöhung abgestimmt, so dass das Sicherungselement am Ventilsitz zentriert wird. Der Ventilsitz kann weiter so gestaltet sein, dass bei eingelegtem Sicherungselement dieser noch in Axialrichtung übersteht und so eine Führung für den Ventilkäfig bildet, der wiederum das Sicherungselement gegen das Ventilgehäuse klemmt.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine perspektivische Schnittansicht eines erfindungsgemäßen Käfigventils;
- Fig. 2: eine vergrößerte Schnittansicht des Käfigventils im Befestigungsbereich, und
- Fig. 3: eine Seitenansicht eines erfindungsgemäßen Sicherungselements.

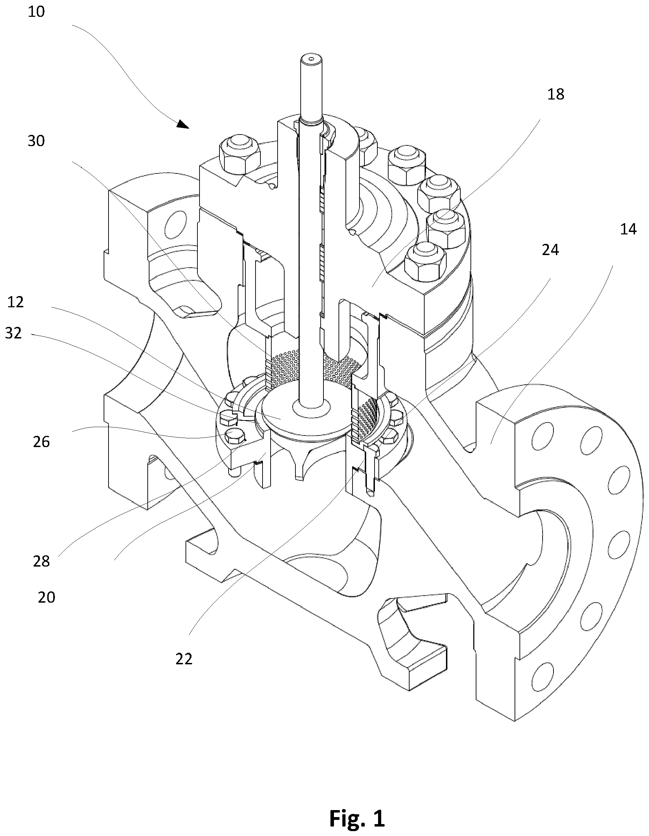

Fig. 1 zeigt eine perspektivische Schnittansicht eines erfindungsgemäßen Käfigventils 10. Das Käfigventil 10, umfasst ein Ventilgehäuse 14, einen Ventildeckel 18, einen Ventilsitz 20 und einen Ventilkäfig 30, sowie ein Ventilglied 12. Der Ventilsitz 20 weist einen Befestigungsbereich 22 auf, in dem in einem Lochkreis Bohrungen 24 vorgesehen sind, durch welche der Ventilsitz 20 mittels Schrauben 26 an dem Ventilgehäuse 14 befestigt wird. Die Schrauben 26 werden so verschraubt, dass die Außenkontur des Schraubenkopfes parallel zu einer am Ventilsitz 20 vorgesehenen Markierung 28 liegt.

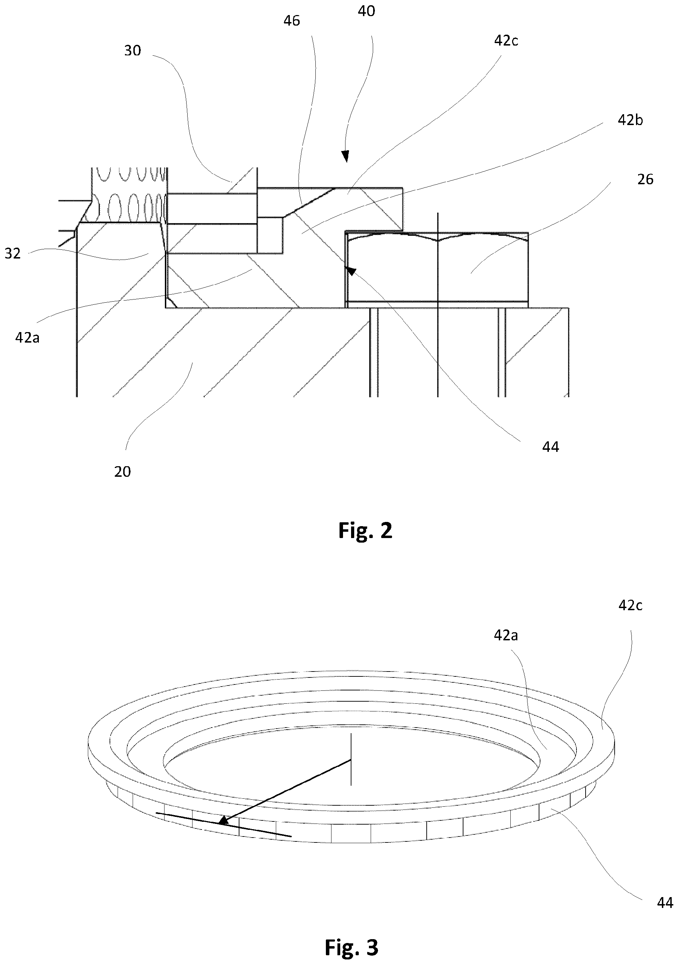

Zwischen den Schrauben 26 und einer innen liegenden Erhebung 32 des Ventilsitzes 20 ist ein ringförmiges Sicherungselement 40 eingebracht. Der Innendurchmesser des Sicherungselements 40 ist auf die Erhebung 32 des Ventilsitzes 20 abgestimmt, so dass eine Zentrierung des Sicherungselements 40 erfolgt. Die Gestaltung des Sicherungselements ist gemäß Fig. 2 und Fig. 3 näher erläutert. Das Sicherungselement 40 wird über den Ventilkäfig 30, der auch an der Erhebung 32 des Ventilsitzes geführt ist, gegen den Ventilsitz 30 geklemmt.

Die Schrauben 26 liegen so verdrehsicher am Sicherungselement 40 an. Ein Lösen der Schrauben wird somit verhindert. Ferner überragt das Sicherungselement 40 die Schraubenköpfe, so dass die Verlustsicherung verbessert wird.

Fig. 2 zeigt eine vergrößerte Schnittansicht im Befestigungsbereich des Ventilsitzes 20.

Das Sicherungselement 40 weist, wie in dieser Schnittansicht deutlich wird, eine Z-förmige Gestaltung auf. Es umfasst dabei im Längsschnitt einen unteren Schenkel 42a, einen Verbindungsschenkel 42b und einen oberen Schenkel 42c. Am Übergang zwischen dem Verbindungsschenkel 42b zum oberen Schenkel 42c ist das Sicherungselement 40 mit einer Fase 46 versehen. Dadurch wird die Strömung wenig beeinträchtigt über die Schraubenköpfe der Schrauben 26 geleitet. Das Sicherungselement weist an seiner seitlichen Wandung im Bereich des unteren Schenkels 42c und des Verbindungsschenkels 42b eine plane Arretierfläche 44 auf, die korrespondierend zur Außenkontur des Schraubenkopfes der Schraube 26 ausgebildet ist. Der Schraubenkopf liegt im eingebauten Zustand dann mit seiner Seitenfläche an der Arretierfläche 44 des Sicherungselements 40 an. Auf diese Weise wird ein Verdrehen und damit ein Lösen der Schrauben 26 auch unter Temperaturschwankung und Vibration zuverlässig verhindert.

Das Sicherungselement 40 ist derart auf die Schraube, insbesondere den Schraubenkopf, abgestimmt, dass im eingebauten Zustand, nämlich wenn das Sicherungselement 40 gegen den Ventilsitz 20 gespannt wird, von dem oberen Schenkel 42c eine Anpresskraft auf die Schraubenköpfe der Schrauben 26 ausgeübt wird, so dass diese Kraft einer Ausreißkraft entgegenwirkt, wodurch die Verlustsicherung verbessert wird.

Fig. 3 zeigt eine perspektivische Ansicht eines Sicherungselements 40, das einen unteren Schenkel 42a, einen Verbindungsschenkel 42b und einen oberen Schenkel 42c aufweist. Im Falle des ringförmigen Sicherungselements 40 sind der untere Schenkel 42a und der obere Schenkel 42b als umlaufende Ringschultern ausgebildet. Die den Schrauben 26 zugewandte Seitenwand ist polygonförmig ausgebildet, wobei die Länge der Kanten des Polygons in etwa der Länge der Kante einer Arretierfläche 44 des Schraubenkopfes der Schraube 26 entspricht. Die Kanten liegen tangential am ringförmigen Sicherungselement 40 an.

### Bezugszeichenliste

- 10: Käfigventil
- 12: Ventilglied
- 14: Ventilgehäuse
- 18: Ventildeckel
- 20: Ventilsitz
- 22: Befestigungsbereich
- 24: Bohrungen
- 26: Schrauben
- 28: Markierung
- 30: Ventilkäfig
- 32: Erhebung
- 40: Sicherungselement
- 42a: unterer Schenkel
- 42b: Verbindungsschenkel
- 42c: oberer Schenkel
- 44: Arretierfläche
- 46: Fase

## Patentansprüche

1. Käfigventil (10) umfassend ein Ventilgehäuse (14), einen Ventilkäfig (30), einen Ventilsitz (20) und ein Ventilglied (12), das mit dem Ventilsitz (20) und mit dem Ventilkäfig (30) zusammenwirkt, um den Strömungsquerschnitt zwischen einem Ventileinlass und einem Ventilauslass einzustellen, wobei der Ventilsitz (20) Befestigungsbohrungen (24) aufweist, durch die der Ventilsitz (20) mit dem Ventilgehäuse (14) mittels Schraubmitteln (26) verschraubt ist, wobei die Schraubmittel (26) eine unrunde oder eckige Außenkontur aufweisen, **dadurch gekennzeichnet, dass** ein Sicherungselement (40) vorgesehen ist, das derart gestaltet ist, dass dieses ein Ringelement bildet, das an der Kopfkontur aller Schraubmittel (26), die den Ventilsitz (20) mit dem Ventilgehäuse (14) verbinden, wenigstens teilweise anliegt und so ein Verdrehen der Schraubmittel (26) verhindert.

2. Käfigventil nach Anspruch 1, **dadurch gekennzeichnet, dass** die Schraubmittel Schrauben (26) sind, die durch die Befestigungsbohrungen (24) mit dem Ventilgehäuse (14) verschraubt werden.

3. Käfigventil nach Anspruch 1, **dadurch gekennzeichnet, dass** die Schraubmittel Muttern sind, die auf, an dem Ventilgehäuse angebrachte Gewindebolzen, die die Befestigungsbohrungen durchsetzen, aufgeschraubt werden.

4. Käfigventil nach einem der vorangehenden Ansprüche, **dadurch gekennzeichnet, dass** die Außenkontur eine Sechskantkontur ist.

5. Käfigventil nach einem der vorangehenden Ansprüche, **dadurch gekennzeichnet, dass** das Sicherungselement (40) scheibenförmig ausgebildet ist und zwischen dem Ventilsitz (20) und dem Ventilkäfig (30) in Axialrichtung eingeklemmt gehalten ist.

6. Käfigventil nach Anspruch 5, **dadurch gekennzeichnet, dass** das Sicherungselement (40) radial innerhalb der Schraubmittel (26) liegt und die Außenkontur des Sicherungselements (40) an die Außenkontur der Schraubmittel (26) angepasst ist.

7. Käfigventil nach einem der vorangehenden Ansprüche, **dadurch gekennzeichnet, dass** das Sicherungselement (40) in seinem Längsschnitt Z-förmig ausgebildet ist, so dass der untere Schenkel (42a) zur Befestigung des Sicherungselements (40) dient und eine untere Wandung seitlich an einem Schraubmittel (26) anliegt und ein oberer Schenkel (42c) die Schraubmittel (26) überragt.

8. Käfigventil nach Anspruch 7, **dadurch gekennzeichnet, dass** das Sicherungselement (40) derart gestaltet ist, dass das Schraubmittel (26), insbesondere der Kopf einer Schraube, in Axialrichtung mit einer Vorspannkraft beaufschlagt wird.

9. Käfigventil nach Anspruch 7 oder 8, **dadurch gekennzeichnet, dass** der Übergang zwischen dem oberen Schenkel (42c) und dem Verbindungsschenkel (42b) gefast ist.

10. Käfigventil nach einem der vorangehenden Ansprüche, **dadurch gekennzeichnet, dass** die Befestigungsbohrungen (24) auf einem Lochkreis in einem Flansch des Ventilsitzes (20) eingebracht sind, wobei der Flansch des Ventilsitzes (20) Markierungen (28) aufweist.

11. Käfigventil nach Anspruch 10, **dadurch gekennzeichnet, dass** die Markierung (28) ein Teil einer Tangente zu einem konzentrischen Kreis zum Lochkreis mit einem Durchmesser von dem Lochkreisdurchmesser abzüglich der Breite des vorgesehenen Schraubmittels mit Vieleckkontur ist.

## Claims

1. Cage valve (10), comprising a valve housing (14), a valve cage (30), a valve seat (20) and a valve member (12) that cooperates with said valve seat (20) and with said valve cage (30) in order to adjust the flow cross-section between a valve inlet and a valve outlet, with said valve seat (20) having mounting bores (24) through which said valve seat (20) is screwed to said valve housing (14) by means of screw means (26) whose outer contour is non-circular or angular, **characterized in that** a securing element (40) is provided which is designed so as to form an annular member that at least partially abuts the head contour of all screw means (26) connecting said valve seat (20) to said valve housing (14) and thus prevents said screw means (26) from turning.

2. Cage valve according to claim 1, **characterized in that** said screw means are screws (26) that are screwed to said valve body (14) through said mounting bores (24).

3. Cage valve according to claim 1, **characterized in that** said screw means are nuts that are screwed onto threaded bolts which are mounted on said valve body and extend through said mounting bores.

4. Cage valve according to any one of the preceding claims, **characterized in that** said outer contour is a hexagonal contour.

5. Cage valve according to any one of the preceding claims, **characterized in that** said securing element (40) is disc-shaped and is held clamped in the axial direction between said valve seat (20) and said valve cage (30).

6. Cage valve according to claim 5, **characterized in that** said securing element (40) lies radially inside said screw means (26) and that the outer contour of said securing element (40) is adapted to the outer contour of said screw means (26).

7. Cage valve according to any one of the preceding claims, **characterized in that** said securing element (40) is Z-shaped in its longitudinal section in such a way that its lower leg (42a) serves to hold said securing element (40) in place and a lower wall laterally abuts a screw means (26) and its upper leg (42c) projects beyond said screw means (26).

8. Cage valve according to claim 7, **characterized in that** said securing element (40) is designed in such a way that said screw means (26), in particular the head of a screw, is subjected to a pretensioning force in the axial direction.

9. Cage valve according to claim 7 or 8, **characterized in that** the transition between said upper leg (42c) and said connecting leg (42b) is beveled.

10. Cage valve according to any one of the preceding claims, **characterized in that** said mounting bores (24) are made into a hole circle in a flange of said valve seat (20), which flange of said valve seat (20) has markings (28).

11. Cage valve according to claim 10, **characterized in that** said marking (28) is part of a tangent to a circle that is concentric to said hole circle and has a diameter which is the hole circle diameter minus the width of the provided screw means having a polygonal contour.

## Revendications

1. Vanne à cage (10) comprenant un logement de vanne (14), une cage de vanne (30), un siège de vanne (20) et un élément de vanne (12) qui coopère avec le siège de vanne (20) et avec la cage de vanne (30) pour régler la section transversale d'écoulement entre une entrée de vanne et une sortie de vanne, dans laquelle le siège de vanne (20) présente des perçages de fixation (24) à travers lesquels le siège de vanne (20) est vissé sur le logement de vanne (14) au moyen de moyens de vissage (26), dans laquelle les moyens de vissage (26) présentent un contour extérieur non circulaire ou carré, **caractérisée en ce qu'**est prévu un élément de sécurité (40) qui est conçu de sorte que celui-ci forme un élément annulaire qui s'applique au moins partiellement sur le contour de tête de tous les moyens de vissage (26) qui relient le siège de vanne (20) avec le logement de vanne (14) et ainsi empêche une rotation des moyens de vissage (26).

2. Vanne à cage selon la revendication 1, **caractérisée en ce que** les moyens de vissage sont des vis (26) qui sont vissées sur le logement de vanne (14) via les perçages de fixation (24).

3. Vanne à cage selon la revendication 1, **caractérisée en ce que** les moyens de vissage sont des écrous qui sont vissés sur des boulons filetés montés sur le logement de vanne, lesquels boulons filetés traversent les perçages de fixation.

4. Vanne à cage selon l'une des revendications précédentes, **caractérisée en ce que** le contour extérieur est un contour hexagonal.

5. Vanne à cage selon l'une des revendications précédentes, **caractérisée en ce que** l'élément de sécurité (40) est conçu en forme de disque et est maintenu coincé dans la direction axiale entre le siège de vanne (20) et la cage de vanne (30).

6. Vanne à cage selon la revendication 5, **caractérisée en ce que** l'élément de sécurité (40) se situe radialement à l'intérieur des moyens de vissage (26) et le contour extérieur de l'élément de sécurité (40) est adapté au contour extérieur des moyens de vissage (26).

7. Vanne à cage selon l'une des revendications précédentes, **caractérisée en ce que** l'élément de sécurité (40) est conçu en forme de Z dans sa section longitudinale, de sorte que la branche inférieure (42a) serve à la fixation de l'élément de sécurité (40) et une paroi inférieure s'applique latéralement contre un moyen de vissage (26) et une branche supérieure (42c) surmonte les moyens de vissage (26).

8. Vanne à cage selon la revendication 7, **caractérisée en ce que** l'élément de sécurité (40) est conçu de sorte que le moyen de vissage (26), en particulier la tête d'une vis, soit sollicité dans la direction axiale avec une force de précontrainte.

9. Vanne à cage selon la revendication 7 ou 8, **caractérisée en ce que** la jonction entre la branche supérieure (42c) et la branche de liaison (42b) est chanfreinée.

10. Vanne à cage selon l'une des revendications précédentes, **caractérisée en ce que** les perçages de fixation (24) sont montés sur un cercle de trou dans un flanc du siège de vanne (20), dans laquelle le flanc du siège de vanne (20) présente des repères (28).

11. Vanne à cage selon la revendication 10, **caractérisée en ce que** le repère (28) est une partie d'une tangente à un cercle concentrique par rapport au cercle de trou avec un diamètre de l'épaisseur, déduction faite du diamètre de cercle de trou, du moyen de vissage prévu avec un contour polygonal.
